# EUROPÄISCHE PATENTSCHRIFT

(11) **EP 3 343 179 B1**
(45) Veröffentlichungstag und Bekanntmachung des Hinweises auf die Patenterteilung: **19.02.2020**
(21) Anmeldenummer: 17020557.9
(22) Anmeldetag: 04.12.2017
(51) Int. Cl.: G01C 21/36

(54) **VERFAHREN ZUM BETREIBEN EINER NAVIGATIONSVORRICHTUNG FÜR DIE INFORMATIONSANGABE ZU EINEM ZIELORT SOWIE NAVIGATIONSVORRICHTUNG UND KRAFTFAHRZEUG**
METHOD FOR OPERATING A NAVIGATION DEVICE FOR PROVIDING INFORMATION ABOUT A DESTINATION AND NAVIGATION DEVICE AND MOTOR VEHICLE
PROCÉDÉ DE FONCTIONNEMENT D'UN DISPOSITIF DE NAVIGATION PERMETTANT D'INDIQUER DES INFORMATIONS SUR UNE DESTINATION AINSI QUE DISPOSITIF DE NAVIGATION ET VÉHICULE AUTOMOBILE

(30) Priorität: 07.12.2016 CZ 20160768
(43) Veröffentlichungstag der Anmeldung: 04.07.2018
(73) Patentinhaber: Skoda Auto a.s., 29301 Mladá Boleslav (CZ)
(72) Erfinder: WEBER, Norbert, 12000 Praha (CZ)

(56) Entgegenhaltungen:
- EP-A2- 1 903 310
- JP-A- 2000 283 785
- JP-A- 2001 222 794

## Beschreibung

Die Erfindung betrifft ein Verfahren zum Betreiben einer Navigationsvorrichtung. Die Navigationsvorrichtung empfängt hierbei eine Benutzereingabe, die eine Ortsangabe enthält. Auf Grundlage der Ortsangabe werden Navigationsdaten ermittelt. Zu der Erfindung gehören auch die Navigationsvorrichtung sowie ein Kraftfahrzeug mit der Navigationsvorrichtung.

In einem Navigationssystem oder einer Navigationsvorrichtung kann man die sogenannte Zieleingabe, d.h. ein Benutzereingabe mit einer Ortsangabe, zum Beispiel über einen Touchscreen (Berührungsbildschirm) oder ein Touchpad (2D-Tastfeld) oder auch per Sprache eingeben. Beim Auswählen des Fahrziels oder Navigationsziels und während der Fahrt dorthin kann es dann von Interesse sein zu wissen, welches Wetter am Zielort herrscht. Eine andere wichtige Information ist das genaue aktuelle Aussehen des Zielorts, um während der Fahrt und kurz vor Erreichen des Zielorts die verbleibende Strecke auf Sicht fahren zu können, d.h. durch Wiedererkennen eines visuellen Merkmals des Zielorts entscheiden zu können, ob man den Zielort erreicht hat oder nicht. Denn Navigationsgeräte geben in der Regel nur die vage Information: "Sie haben das Ziel erreicht, das Ziel liegt auf der rechten/linken Seite."

Die Dokumente JP 2001 222794 A und JP 2000 283785 A zeigen jeweils ein Verfahren zum Betreiben einer Navigationsvorrichtung, um ein Kamerabild von einem anvisierten Zielort einer Fahrt zu beschaffen und einem Fahrer schon bei der Anfahrt zu zeigen.

Das Dokument EP 1 903 310 A2 zeigt ein Verfahren, um zu unterschiedlichen Zielorten jeweils eine Fotographie des Zielorts abzuspeichern, um bei der Auswahl eines der Zielorte schon einen visuellen Eindruck im Voraus vermitteln zu können.

Der Erfindung liegt die Aufgabe zugrunde, mit einer Navigationsvorrichtung den Zielort nutzbringend zu beschreiben, um am Ende der Routenführen dem Benutzer eine Orientierung am Zielort zu bieten.

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figuren beschrieben.

Das erfindungsgemäße Verfahren zum Betreiben der Navigationsvorrichtung sieht vor, dass die eingangs beschriebene Benutzereingabe empfangen wird, die eine Ortsangabe enthält. Die Ortsangabe kann beispielsweise ein Ortsname sein. Auf der Grundlage der Ortsangabe werden in einer Navigationsdatenbank Navigationsdaten ermittelt, die einen durch die Ortsangabe beschriebenen Zielort beschreiben. Die Navigationsdaten können zum Beispiel eine Streckenbeschreibung, die zu dem Zielort mit dem Ortsnamen hinführt, und/oder Koordinaten des Zielorts enthalten.

Die Navigationsvorrichtung kann dann anhand der Navigationsdaten in bekannter Weise eine Navigationsassistenz oder Routenführung für den Benutzer bereitstellen, also dem Benutzer Manövrieranweisungen angeben. Alternativ dazu kann auf Grundlage der Navigationsdaten in einem Kraftfahrzeug eine pilotierte Fahrt begonnen werden, bei welcher das Kraftfahrzeug also ohne ein Zutun des Fahrers durch ein Steuergerät gesteuert wird.

Um nun den Fahrer weiter bei der Navigation zu unterstützen, ist es erfindungsgemäß vorgesehen, dass nach Empfangen der Benutzereingabe und zusammen mit oder zusätzlich zu den Navigationsdaten noch aus zumindest einer vorrichtungsexternen Bildquelle ein Realbild von dem Zielort angefordert wird. Die vorrichtungsexterne Bildquelle ist also nicht Bestandteil der Navigationsvorrichtung selbst. Beispielsweise kann die Bildquelle durch einen Server des Internets bereitgestellt oder gebildet sein. Mit dem Realbild liegt nun also eine Bildinformation betreffend das Aussehen des Zielorts vor. Wenn die Bildquelle das angeforderte Realbild bereitstellen oder auffinden kann, wird dieses auf einer Anzeigefläche angezeigt.

Durch die Erfindung ergibt sich der Vorteil, dass zu Beginn der Navigationsassistenz oder Routenführung und/oder während derselben ein Realbild des Zielorts bereitsteht und somit ein aktueller Zustand und/oder das reale, tatsächliche Aussehen des Zielorts signalisiert wird. Somit kann der Benutzer bei Erreichen des Zielorts dieses visuell wiedererkennen. Er ist somit nicht auf die Navigationsassistenz selbst angewiesen, um das Erreichen des Zielorts zu erkennen.

Es kann sein, dass das Realbild von der Bildquelle nicht zur Verfügung gestellt werden kann. Falls von der Bildquelle signalisiert wird, dass das angeforderte Realbild fehlt, wird ein Ersatzechtzeitbild von einer dem Zielort am nächsten gelegenen Ersatzwebcam (Internet-Kamera) angefordert. Eine Abstandsangabe der Ersatzwebcam zum Zielort wird ebenfalls ermittelt und zusammen mit dem Ersatzechtzeitbild angezeigt. Hierdurch ergibt sich der Vorteil, dass zumindest ein aktueller Zustand einer Umgebung des Zielorts durch die Navigationsvorrichtung signalisiert werden kann.

Zu der Erfindung gehören auch optionale zusätzliche technische Merkmale, durch die sich weitere Vorteile ergeben.

Als Bildquelle wird bevorzugt zumindest eine Webcam (Internet-Kamera) angesteuert. Als Realbild wird entsprechend ein Echtzeitbild angefordert. Hierdurch ergibt sich der Vorteil, dass ein aktueller Zustand des Zielorts durch die Navigationsvorrichtung signalisiert oder ermittelt wird. Insbesondere der Einfluss des Wetters vor Ort signalisiert.

Die besagte Ortsangabe, die der Benutzer mittels der Benutzereingabe eingibt, kann eine Adresse des Zielorts darstellen. Die Adresse ist derart vollständig, dass ein Gebäude identifiziert werden kann. Ist dies der Fall, so wird bevorzugt als Bildquelle ein Fotodienst für Gebäudebilder angesteuert. Als Realbild wird dann eine Fotografie eines an der Adresse befindlichen Gebäudes angefordert. Ein solcher Fotodienst kann beispielsweise der Internetdienst "Google Street View" ® sein. Durch Bereitstellen einer Fotografie des Gebäudes, welches den Zielort darstellt, ist eine visuelle Wiedererkennung und damit ein eigenständiges Manövrieren des Fahrers am Zielort, beispielsweise zum Entscheiden einer Parkplatzwahl, ermöglicht. Auch ein kamerabasiertes Manövrieren bei pilotierter Fahrt ist so ermöglicht.

Bevorzugt wird die besagte Fotografie angefordert und nur bei deren Ausbleiben das beschriebene Echtzeitbild und bei dessen Ausbleiben dann das Ersatzechtzeitbild genutzt.

Von Navigationsvorrichtungen ist bekannt, dass die Ortseingabe mehrstufig erfolgen kann, indem man zunächst in einer ersten Stufe eine Landesangabe eines Landes macht, in welchem der Zielort liegt. Somit wird als erster Teil der Ortsangabe diese Landesangabe empfangen. Die Erfindung kann nun dahingehend weitergebildet werden, dass bei Empfangen der Landesangabe, wenn also der Zielort mit seiner Adresse noch nicht definiert oder angegeben ist, zunächst ein nationales Symbol des Landes ermittelt und mittels der Anzeigeeinrichtung angezeigt wird. Ein solches Symbol kann beispielsweise die Flagge und/oder das Wappentier des Landes umfassen oder vorsehen. Hierdurch ergibt sich der Vorteil, dass bei der Bedienung signalisiert wird, in welchem Teil der Navigationsdatenbank (Land) die Navigationsdaten gesucht werden. Liegt hier ein Fehler in der Benutzereingabe vor, so wird dies dem Benutzer gleich signalisiert, indem er anhand des Symbols des Landes erkennt, ob er das richtige Land ausgewählt hat.

Bevorzugt ist vorgesehen, dass zumindest zeitweise das Realbild als bildschirmfüllendes Hintergrundbild angezeigt wird, während weiterhin zumindest ein Teil der Ortsangabe und/oder der Navigationsdaten angezeigt wird. Somit findet eine kompakte Darstellung sowohl des optischen Erscheinungsbilds des Zielorts als auch der Ortsangabe und/oder Navigationsdaten statt.

Hierdurch ist aber die störungsfreie Betrachtung des Hintergrundbilds nicht immer gegeben. Um dies zu ermöglichen oder zu garantieren, sieht eine Weiterbildung vor, dass bei Erkennen einer Betätigung oder Berührung der Anzeigefläche (im Falle eines Touchscreens) und/oder eines Vollbild-Bedienelements (beispielsweise eine Tastfläche oder ein Button auf dem Touchpad) eine Vollbildansicht des Realbilds angezeigt wird, die frei von der Ortsangabe und/oder den Navigationsdaten ist. Hierzu wird die entsprechende Vollbildansicht auf der Grundlage des Realbilds erzeugt.

Um dem Benutzer dann wieder die Ortsangabe und/oder die Navigationsdaten bereitstellen zu können, also beispielsweise Manövrieranweisungen für die Navigationsassistenz, sollte das Vollbild wieder beseitigt werden können. Damit dies mit geringem Bedienaufwand und/oder geringer Ablenkung für die Bedienung erfolgt, ist bevorzugt vorgesehen, dass die Vollbildansicht nach einer vorbestimmten Anzeigedauer wieder beendet wird. Um ein gezieltes Beseitigen des Vollbild oder der Vollbildansicht zu ermöglichen, kann zusätzlich oder alternativ dazu eine Betätigung eines Zurück-Bedienelements (z.B. Touchscreen-Bedienfläche) erkannt werden und daraufhin die Vollbildansicht wieder beendet werden.

Während auf der Grundlage der Navigationsdaten eine Navigationsassistenz durchgeführt wird, wie sie an sich aus dem Stand der Technik bekannt ist, wird bevorzugt das Realbild aktualisiert, indem eine aktuelle Version des Realbilds bei der zumindest einen Bildquelle angefordert wird. Hierdurch wird dem Benutzer signalisiert, in welcher Weise sich während der Reise zu dem Zielort hin die dort vorliegende Situation, beispielsweise das Wetter, ändert oder entwickelt.

Das Aktualisieren kann zu vorbestimmten Zeitpunkten erfolgen, beispielsweise periodisch. Beispielsweise kann ein vorbestimmter Zeitabstand zwischen den Aktualisierungen in einem Bereich von 10 Sekunden bis 15 Minuten liegen. Hierdurch ist dann kein Bedienaufwand nötig. Damit ist auch eine Ablenkung des Benutzers durch Bedienvorgänge nicht vorhanden. Alternativ oder zusätzlich kann vorgesehen sein, dass bei Erkennen einer Betätigung eines Aktualisieren-Bedienelements (z.B. Touchscreen-Bedienfläche) das Aktualisieren durchgeführt wird. Es kann sich hierbei wieder um ein Bedienfeld beispielsweise auf einem Touchscreen handeln. Durch ein Aktualisieren-Bedienelement ergibt sich der Vorteil, dass die Aktualisierung gezielt durch einen Benutzer gesteuert werden kann.

Bevorzugt wird das aktuelle Realbild während der Navigationsassistenz zusammen mit den Navigationsangaben angezeigt. So wird die Veränderung am Zielort während der Reise signalisiert oder erkennbar gemacht.

Ein weiterer Vorteil ergibt sich, wenn das Realbild zusammen mit zumindest einem Teil der Navigationsdaten (beispielsweise den Koordinaten des Zielorts) in einem Datenspeicher für sogenannte "letzte Ziele" abgespeichert gehalten wird. Es sind also in den Datenspeicher vorangegangene Navigationsziele gespeichert. Möchte man nun aus diesem Datenspeicher eines der vorangegangenen Navigationsziele noch einmal auswählen, so steht das Realbild des Zielorts bereit.

Die besagten Bedienelemente können auch Spracheingabe-Bedienelemente sein, also die Erkennung von Befehlsworten.

Um das erfindungsgemäße Verfahren durchführen zu können, ist durch die Erfindung auch die Navigationsvorrichtung bereitgestellt. Diese weist eine Prozessoreinrichtung auf, die dazu eingerichtet ist, eine Ausführungsform des erfindungsgemäßen Verfahrens durchzuführen. Die Navigationsvorrichtung kann beispielsweise als portables Gerät ausgestaltet sein. Die Navigationsvorrichtung kann beispielsweise auf der Grundlage eines Smartphones, Tablet-PCs oder einer Smartwatch realisiert sein. Hierzu kann ein entsprechender Programmcode in Form einer sogenannten App (Applikation) zum Durchführen durch die Prozessoreinrichtung des Geräts bereitgestellt sein.

Bevorzugt ist vorgesehen, dass für ein Kraftfahrzeug eine Navigationsassistenz bereitgestellt wird. Die Erfindung sieht deshalb auch ein Kraftfahrzeug mit einer Anzeigefläche, beispielsweise einem Bildschirm oder einer Kopf-oben-Anzeige (Head-up-Display) und mit einer Navigationsvorrichtung gemäß der Erfindung vor.

Das erfindungsgemäße Kraftfahrzeug kann als Kraftwagen, zum Beispiel als Personenkraftwagen oder Lastkraftwagen, ausgestaltet sein.

Im Folgenden ist ein Ausführungsbeispiel der Erfindung beschrieben. Hierzu zeigt:
- Fig. 1: eine schematische Darstellung einer Ausführungsform des erfindungsgemäßen Kraftfahrzeugs;
- Fig. 2 bis Fig. 11: jeweils eine schematische Darstellung von Anzeigeinhalten auf einer Anzeigefläche des Kraftfahrzeugs, um einen Ablauf einer Ausführungsform des erfindungsgemäßen Verfahrens zu veranschaulichen.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

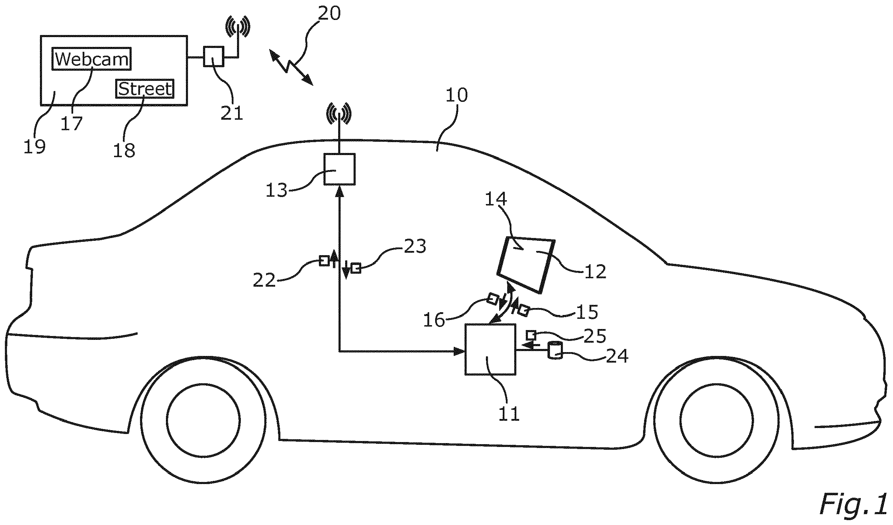

Fig. 1 zeigt ein Kraftfahrzeug 10, bei dem es sich um einen Kraftwagen, zum Beispiel einen Personenkraftwagen, handeln kann. Dargestellt sind eine Navigationsvorrichtung 11, eine Anzeigeeinrichtung 12, eine Kommunikationseinrichtung 13 des Kraftfahrzeugs 10. Die Navigationsvorrichtung 11 kann auf einer Anzeigefläche 14 der Anzeigeeinrichtung 13 durch Erzeugen von Anzeigedaten 15 einen Anzeigeinhalt der Anzeigefläche 14 steuern. Die Anzeigeeinrichtung 12 kann die Anzeigefläche 14 beispielsweise durch einen Touchscreen bereitstellen. Entsprechend können auch Berührungsdaten 16 an der Anzeigefläche 14 erfasst und durch die Navigationsvorrichtung 11 genutzt werden. Die Navigationsvorrichtung 11 kann beispielsweise auf der Grundlage eines Steuergeräts des Kraftfahrzeugs 10 realisiert sein. Die Navigationsvorrichtung 11 und die Anzeigeeinrichtung 12 können auch zusammen beispielsweise als Smartphone bereitgestellt sein. Die Navigationsvorrichtung 11 kann mittels der Kommunikationseinrichtung 13 auch mit zumindest einer Bildquelle 17, 18 kommunizieren. Die Bildquellen 17, 18 können zum Beispiel jeweils durch einen Server des Internets 19 bereitgestellt sein. Die Bildquelle 17 kann zum Beispiel eine Webcam sein. Die Bildquelle 18 kann zum Beispiel ein Fotodienst für Gebäudebilder sein. Die Kommunikationseinrichtung 13 kann beispielsweise ein Mobilfunkmodul und/oder ein WLAN-Funkmodul (WLAN - Wireless Local Area Network) umfassen. Mittels der Kommunikationseinrichtung 13 kann eine Funkverbindung 20 beispielsweise zu einem Mobilfunknetz 21 oder direkt zum Internet 19 bereitgestellt werden.

Die Navigationsvorrichtung 11 kann durch Aussenden von Anforderungsdaten 22 aus den Bildquellen 17, 18 jeweils ein Realbild anfordern, dessen Bilddaten 23 über die Funkverbindung 20 mittels der Navigationsvorrichtung 11 empfangen werden können. Die Navigationsvorrichtung 11 kann auf der Grundlage der Bilddaten 23 dann die Anzeigedaten 15 erzeugen.

Im Folgenden ist ein Verfahren beschrieben, das durch die Navigationsvorrichtung 11 zum Erzeugen der besagten Anzeigeinhalte auf der Anzeigefläche 14 ausgeführt werden kann.

Für eine Navigationsassistenz kann die Navigationsvorrichtung 11 aus einer Navigationsdatenbank 24 Navigationsdaten 25 abrufen oder auslesen. Die Navigationsdatenbank 24 kann durch einen Datenspeicher des Kraftfahrzeugs 10 bereitgestellt sein und/oder (nicht dargestellt) durch einen Navigationsserver des Internets 19 realisiert sein.

Die Grundidee der Navigationsvorrichtung 11 ist nun, dass bereits bei der Eingabe eines Zielorts, also einer Ortsangabe beispielsweise mittels der Eingabedaten 16, schon ein Hintergrundbild auf der Anzeigefläche 14 angezeigt wird, welches bevorzugt ein Echtzeitbild einer Webcam des Zielorts zeigt.

Der Benutzer erhält somit ein Bild als Überblick vom Zielort. Zum anderen kann bei einem Bild einer Webcam 17 die aktuelle, momentane Wettersituation auf der Anzeigefläche 14 erkannt werden.

In einer weiteren Version kann bei einer Eingabe der genauen Adresse (Ort, Straße, Hausnummer) als Hintergrundbild ein von dem Fotodienst 18 bereitgestelltes Bild des Zielorts in Form eines Fotos oder einer Fotografie bereitgestellt werden. Ist ein Bild des Zielorts im Internet 19 nicht verfügbar, so schaltet die Navigationsvorrichtung automatisch auf die nächstliegende Webcam 17 mit Angabe um, wie weit diese vom Zielort entfernt ist. Es kann auch die Möglichkeit bereitgestellt werden, zwischen einem statischen Bild des Ziels (Fotografie) auf ein Kamerabild einer Webcam 17 umzuschalten, um zum Beispiel das aktuelle Wetter zu sehen.

In einer weiteren Möglichkeit kann das Bild als Icon innerhalb einer Straßenkarte angezeigt werden und optional durch Antippen vergrößert werden.

Diese Ausprägungsmöglichkeiten sind im Folgenden anhand der Figuren noch einmal genauer beschrieben.

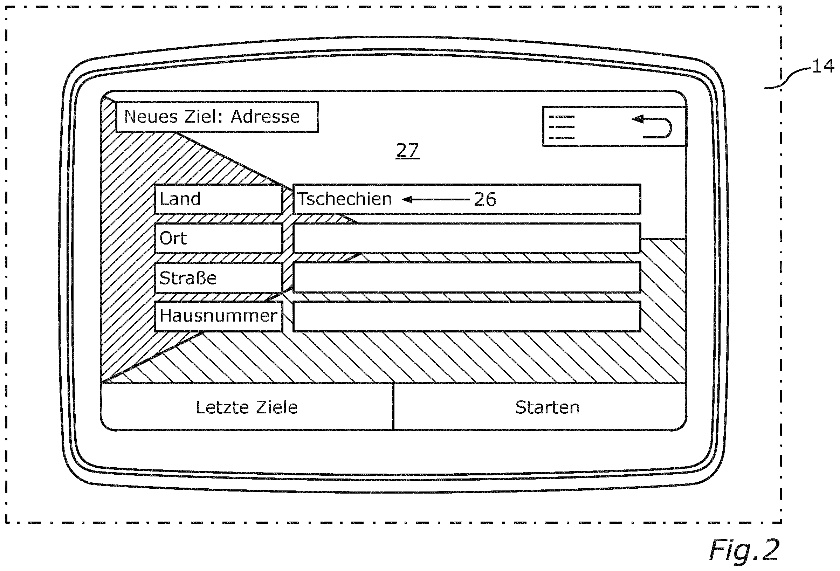

Fig. 2 zeigt die Eingabe einer Ortsangabe, wobei der Benutzer in der in Fig. 2 dargestellten Situation erst einen Teil der Ortsangabe eingegeben hat, nämlich lediglich eine Landesangabe 26 (in dem Beispiel "Tschechien").

Es fehlen beispielsweise noch der Ort ("Ort"), die Straße ("Straße") und die Hausnummer ("Hausnummer").

Dem Benutzer wird während der weiteren Eingabe ein Symbol des durch die Landesangabe angegebenen Landes angezeigt 27. In Fig. 2 ist die Flagge des Landes angezeigt. Sobald also das Land eingegeben wird, erscheint die Landesflagge beispielsweise für eine Zeit X1 als Hintergrund und/oder bis zur nächsten Eingabe.

Dargestellt sind noch zwei Funktionen zum Abrufen vorangegangener Navigationsziele ("Letzte Ziele") und das Starten der Routenführung oder Navigationsassistenz ("Starten").

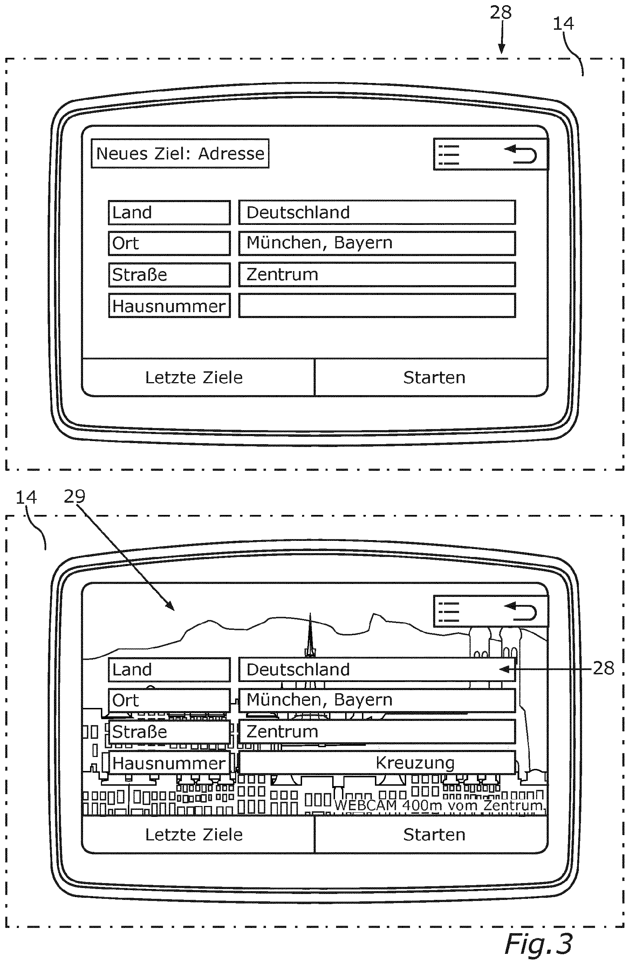

Fig. 3 zeigt, wie bei Eingabe einer Stadt als Zielort keine genaue Adresse nötig ist.

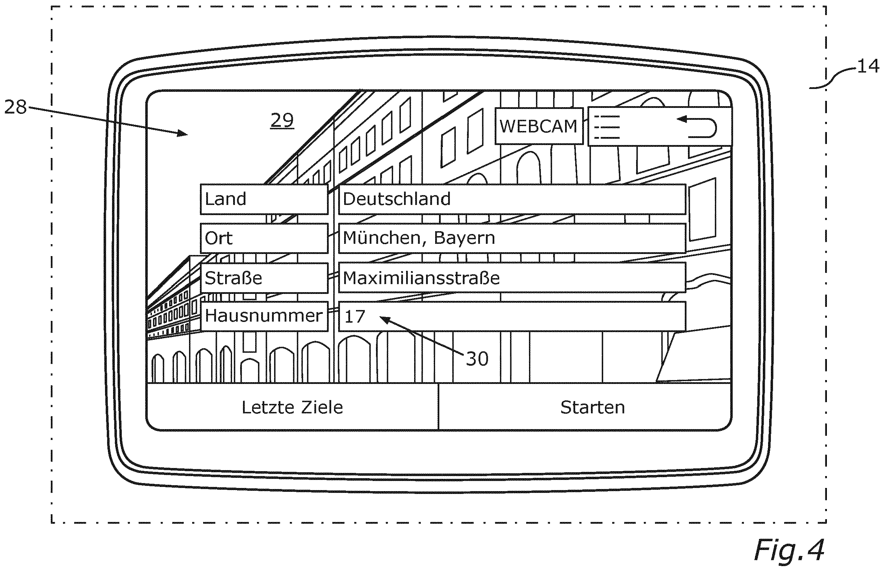

In diesem Fall kann, wie in Fig. 4 veranschaulicht, mit dem Erkennen des Zielorts aus der Ortsangabe der Hintergrund der Anzeigefläche ein Bild der Webcam 17 auf dem Hintergrund angezeigt werden. Hat der Zielort keine Webcam 17, so kann die nächstgelegene Webcam genutzt werden, mit einer Angabe, wie weit diese vom Zielort entfernt ist. Die Ortsangabe 28 kann weiterhin über das Hintergrundbild 29 eingeblendet werden.

Nach dem Drücken des Soft-Keys oder der Touchscreen-Bedienfläche "Starten" kann die Route auf Grundlage der aus der Navigationsdatenbank ermittelten Navigationsdaten 25 berechnet werden. Es kann dann beispielsweise eine digitale Karte für die Routenführung (Navigationsassistenz) dargestellt werden (nicht dargestellt).

Fig. 4 veranschaulicht eine erweiterte Funktion, bei welchem bei Erkennen des Navigationsziels und bei einer Ortsangabe 28 mit vollständiger Adresse 30 als Hintergrundbild anhand der Straße und Hausnummer eine im Internet 19 hinterlegte Fotografie des Zielorts (zum Beispiel von "Google Street View" ®) bereitgestellt wird. Ist ein solches Bild des Ziels im Internet nicht verfügbar, kann die Navigationsvorrichtung automatisch auf die nächstgelegene Webcam umschalten, mit eine Angabe, wie weit diese vom Zielort entfernt ist. Möchte der Benutzer ein Webcam-Bild (zum Beispiel vom Internetdienst Wetter Live ®) so drückt er den in Fig. 4 gezeigten Soft-Key oder die Bedienfläche "Webcam" und wird auf die nächste Webcam zu seinem Zielort aufgeschaltet.

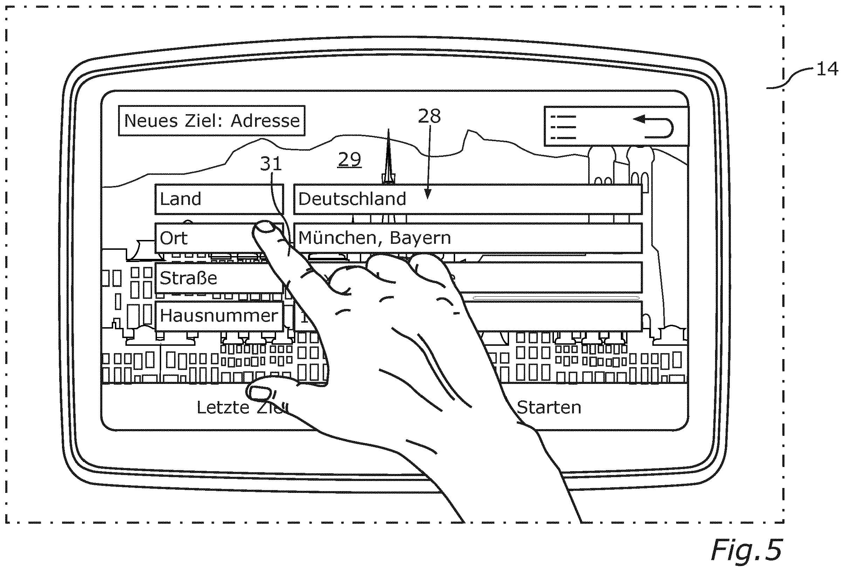

Fig. 5 veranschaulicht, wie man eine Ansicht als Vollbild ohne die angezeigte Ortsangabe 28 sehen kann. Hierzu kann der Benutzer beispielsweise mit einem Finger 31 die Anzeigefläche 14 berühren. Der Benutzer drückt also mit dem Finger 31 auf den Bildschirm und die Eingabefelder werden ausgeblendet.

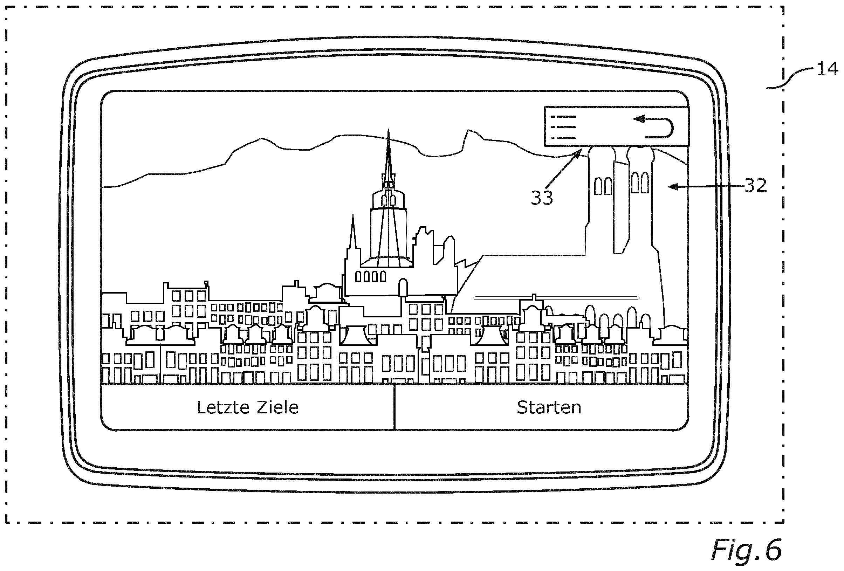

Fig. 6 zeigt die sich ergebende Vollbildansicht 32. Die Eingabefelder können dann für eine Zeit X2 ausgeblendet werden. Alternativ können die Eingabefelder mit einem Zurück-Bedienelement 33 wieder eingeblendet werden, sodass sich die Ortsangabe 28 wie in Fig. 5 wieder ergibt.

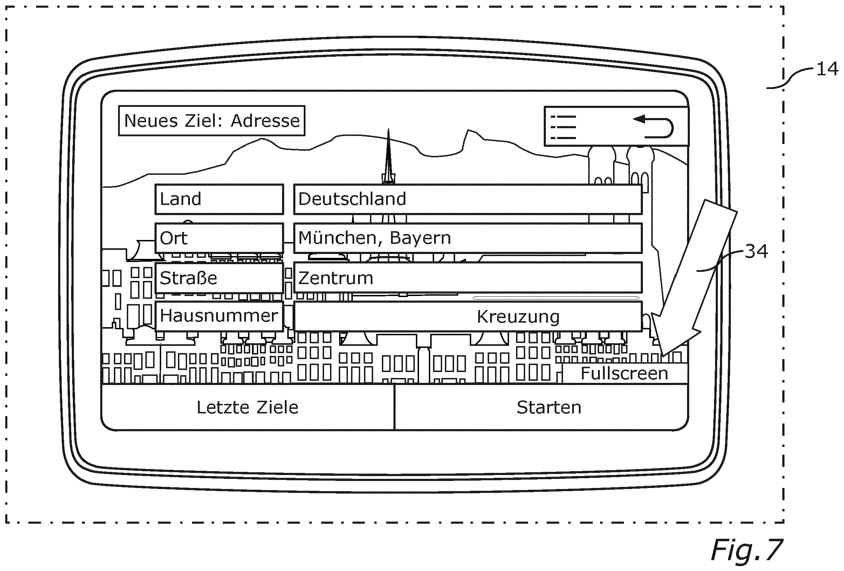

Eine Alternative kann sein, dass mit dem Erscheinen des Hintergrundbilds 29 ein Vollbild-Bedienelement 34 auf der Anzeigefläche angezeigt wird, wie dies in Fig. 7 veranschaulicht ist. Das Vollbild-Bedienelement 34 kann zum Beispiel ein Button auf dem Touchscreen sein, der gedrückt werden muss, um das Vollbild ohne Eingabefelder anzuzeigen, wie es in Fig. 6 veranschaulicht ist.

Durch Bedienen des Vollbild-Bedienelements 34 werden dann die Eingabefelder für die Ortsangabe zum Beispiel für eine Zeit X2 ausgeblendet. Alternativ werden die Eingabefelder mit dem Rückwärts-Bedienelement 33 in der beschriebenen Weise wieder eingeblendet.

Das Realbild 29 wird automatisch bevorzugt für die Länge der navigierten Fahrt von der Navigationsvorrichtung 11 zusammen mit den Navigationsdaten 25 und/oder dem daraus berechneten Routenplan hinterlegt oder gespeichert.

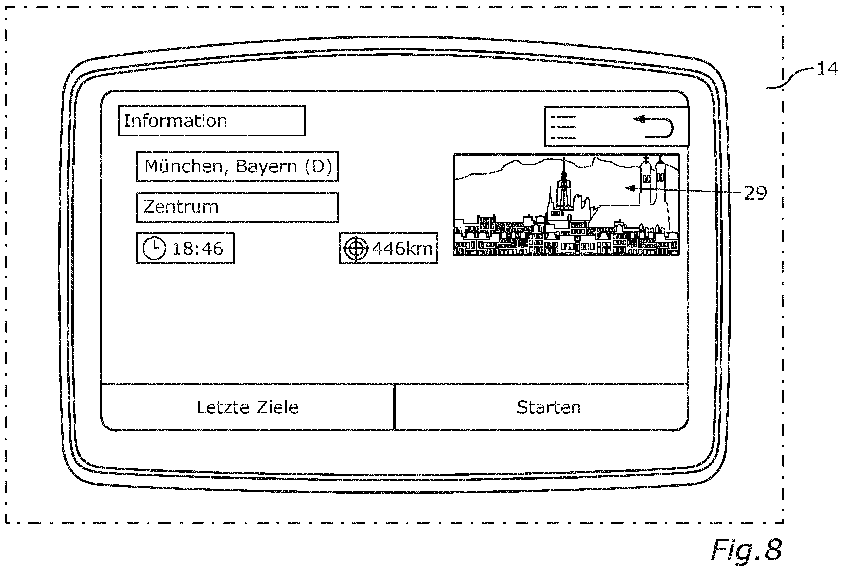

Fig. 8 veranschaulicht, wie unter dem Routenplan oder den Informationen zur aktuellen Route das Realbild 29 abgespeichert werden kann. Ein erstes Szenario kann hierbei sein, dass das Bild gespeichert und mit Erreichen des Zielorts gelöscht wird. Ein zweites Szenario kann sein, dass das Bild zusammen mit der Ortsangabe unter den letzten Zielen abgespeichert wird als statisches Bild und dann bei abermaligem Aufruf der Navigationsdaten erneut bereitgestellt wird. Hierbei kann ein Update-Bedienelement oder Aktualisieren-Bedienelement vorgesehen sein, um ein erneutes Anfordern eines aktuellen Realbilds 29 auszulösen.

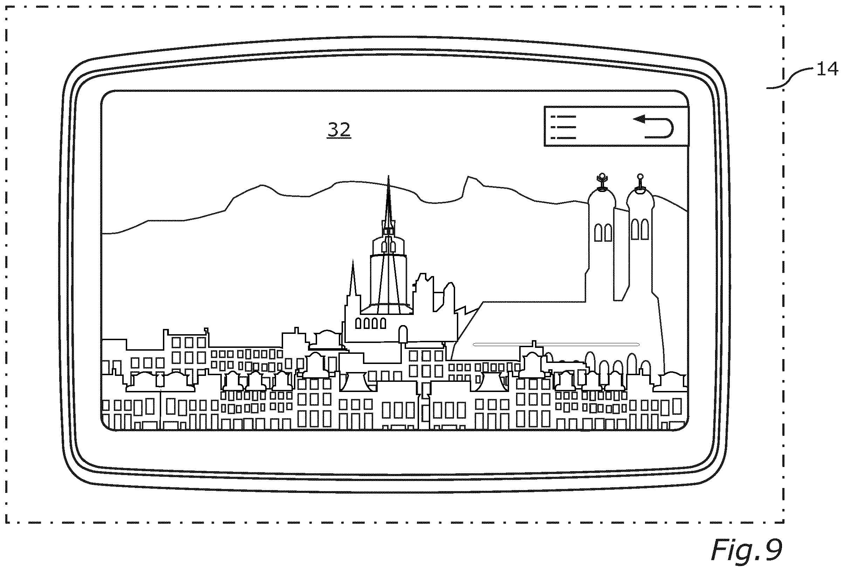

In Fig. 8 ist das Realbild 29 als teilfüllendes Bild bereitgestellt oder angezeigt. Durch Antippen dieses kleinen Realbilds kann eine Vollbildansicht, wie in Fig. 9 veranschaulicht, erzeugt werden. Nach einer Zeit X3 auf dem Bildschirm kann wieder in die Ansicht von Fig. 8 zurückgekehrt werden. Alternativ dazu kann ein Eingabefeld mit einem Rückwärts-Bedienelement wie in Fig. 9 dargestellt vorgesehen sein.

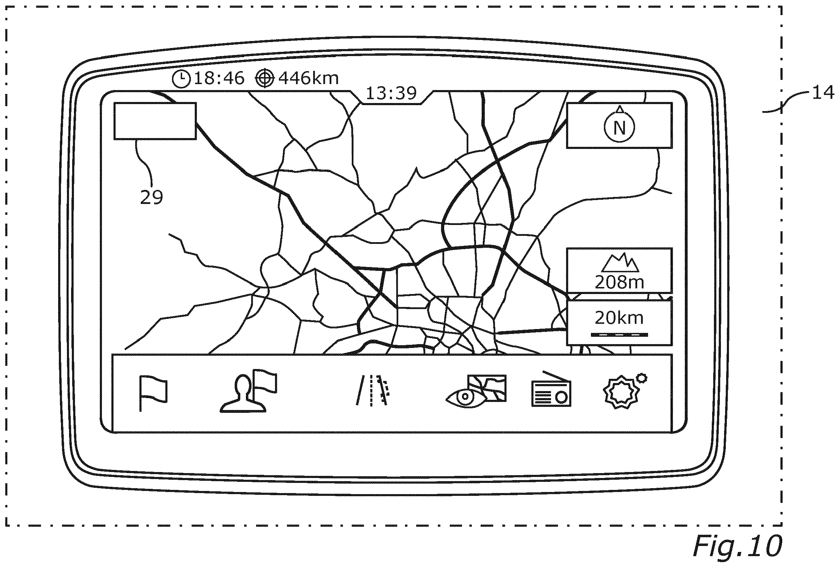

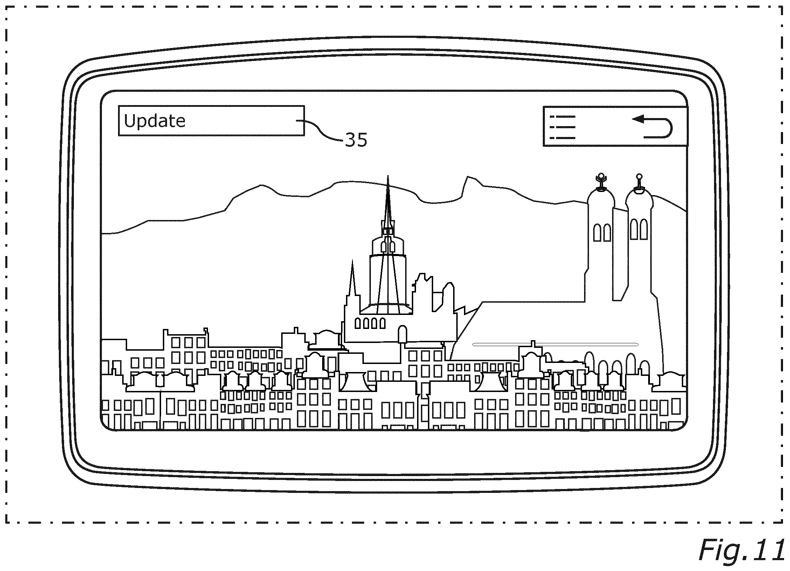

Fig. 10 zeigt, wie die Möglichkeit bereitgestellt werden kann, das Realbild als Bestandteil einer digitalen Navigationskarte bereitzustellen oder zu hinterlegen. Durch Antippen dieses Bildbestandteils mit dem Realbild kann eine Vollbildansicht, wie sie in Fig. 11 dargestellt ist, erzeugt werden. Die verkleinerte Version des Realbilds gemäß Fig. 10 kann dann wieder nach einer Zeit X4 oder durch die Rückwärtstaste im Vollbildmodus gemäß Fig. 11 erfolgen.

Während der Fahrt kann ein Aktualisieren-Bedienelement 35 bereitgestellt werden, um beispielsweise im Vollbildmodus das Realbild, wie es aus der Webcam 17 empfangen wird, zu aktualisieren. Statische Bilder aus dem Netz können dagegen nur dann aktualisiert werden, wenn ein Anbieter ein neues Bild bereitstellt.

Eine weitere Möglichkeit besteht darin, im Hintergrund das Bild kontinuierlich, d.h. automatisiert nach den Möglichkeiten der Webcam 17, zu aktualisieren. So wäre zusammen mit dem Routenplan und der digitalen Karte gemäß Fig. 10 dann immer das aktuelle Bild vom Zielort hinterlegt und man könnte nach Bedarf dieses in der in Fig. 11 gezeigten Weise auf der Anzeigefläche 14 anzeigen.

Insgesamt zeigt das Beispiel, wie durch die Erfindung eine Informationsanzeige einer Navigationsvorrichtung erweitert werden kann

### Bezugszeichenliste

- 10: Kraftfahrzeug
- 11: Navigationsvorrichtung
- 12: Anzeigeeinrichtung
- 13: Kommunikationseinrichtung
- 14: Anzeigefläche
- 15: Anzeigedaten
- 16: Eingabedaten
- 17: Bildquelle (Webcam)
- 18: Bildquelle (Fotodienst)
- 19: Internet
- 20: Funkverbindung
- 21: Mobilfunknetz
- 22: Anforderungsdaten
- 23: Bilddaten
- 24: Navigationsdatenbank
- 25: Navigationsdaten
- 26: Landesangabe
- 27: Symbol
- 28: Ortsangabe
- 29: Realbild
- 30: Adresse
- 31: Finger
- 32: Vollbildansicht
- 33: Zurück-Bedienelement
- 34: Vollbild-Bedienelement
- 35: Aktualisieren-Bedienelement

## Patentansprüche

1. Verfahren zum Betreiben einer Navigationsvorrichtung (11), wobei eine Benutzereingabe, die eine Ortsangabe (28) enthält, empfangen wird und auf der Grundlage der Ortsangabe (28) in einer Navigationsdatenbank (24) Navigationsdaten (25) zu einem durch die Ortsangabe (28) beschriebenen Zielort ermittelt werden, wobei aus zumindest einer vorrichtungsexternen Bildquelle (17, 18) ein Realbild (29) von dem Zielort angefordert wird und bei Empfangen des Realbilds (29) auf einer Anzeigefläche (14) angezeigt wird,
**dadurch gekennzeichnet, dass**
falls durch die zumindest eine Bildquelle (17, 18) signalisiert wird, dass das Realbild (29) fehlt, ein Ersatzechtzeitbild von einer dem Zielort am nächsten gelegenen Ersatzwebcam angefordert wird und eine Abstandsangabe der Ersatzwebcam zum Zielort ermittelt und zusammen mit dem Ersatzechtzeitbild angezeigt wird.

2. Verfahren nach Anspruch 1, wobei als Bildquelle (17) zumindest eine Webcam angesteuert wird und als Realbild (29) ein Echtzeitbild angefordert wird.

3. Verfahren nach einem der vorhergehenden Ansprüche, wobei die Ortsangabe eine Adresse (30) des Zielorts darstellt und als Bildquelle (18) ein Fotodienst für Gebäudebilder angesteuert wird und als Realbild (29) eine Fotographie eines an der Adresse (30) befindlichen Gebäudes angefordert wird.

4. Verfahren nach Anspruch 3, wobei zuerst die Fotographie angefordert wird und bei deren Ausbleiben das Echtzeitbild angefordert wird.

5. Verfahren nach einem der vorhergehenden Ansprüche, wobei Benutzereingabe mehrstufig erfolgt und in einer ersten Stufe eine Landesangabe (26) eines Landes, in welchem der Zielort liegt, als erster Teil der Ortsangabe (28) empfangen wird und bei Empfangen der Landesangabe (26) ein nationales Symbol (27) des Landes ermittelt und angezeigt wird.

6. Verfahren nach einem der vorhergehenden Ansprüche, wobei das Realbild (29) als bildschirmfüllendes Hintergrundbild während der Anzeige zumindest eines Teils der Ortsangabe (28) und/oder der Navigationsdaten (25) angezeigt wird.

7. Verfahren nach einem der vorhergehenden Ansprüche, wobei bei Erkennen einer Betätigung der Anzeigefläche (14) und/oder eines Vollbild-Bedienelements (34) eine Vollbildansicht (32) des Realbilds (29), die frei von der Ortsangabe (28) und/oder den Navigationsdaten (25) ist, erzeugt und angezeigt wird.

8. Verfahren nach Anspruch 7, wobei die Vollbildansicht (32) nach einer vorbestimmten Anzeigedauer und/oder bei Erkennen einer Betätigung eines Zurück-Bedienelements (33) wieder beendet wird.

9. Verfahren nach einem der vorhergehenden Ansprüche, wobei auf der Grundlage der Navigationsdaten (25) eine Navigationsassistenz durchgeführt wird und während der Navigationsassistenz das Realbild (29) aktualisiert wird, indem eine aktuellen Version des Realbilds (29) bei der zumindest einen Bildquelle (17, 18) angefordert wird.

10. Verfahren nach Anspruch 9, wobei das Aktualisieren zu vorbestimmten Zeitpunkten und/oder bei Erkennen einer Betätigung eines Aktualisieren-Bedienelements (35) durchgeführt wird.

11. Verfahren nach einem der Ansprüche 9 oder 10, wobei während der Navigationsassistenz das aktuelle Realbild (29) zusammen mit Navigationsangaben angezeigt wird.

12. Verfahren nach einem der vorhergehenden Ansprüche, wobei das Realbild (29) zusammen mit zumindest einem Teil der Navigationsdaten (25) in einem Datenspeicher für vorangegangene Navigationsziele abgespeichert gehalten wird.

13. Navigationsvorrichtung (11) mit einer Prozessoreinrichtung, die dazu eingerichtet ist, ein Verfahren nach einem der vorhergehenden Ansprüche durchzuführen.

14. Kraftfahrzeug (10) mit einer Anzeigefläche (14) und mit einer Navigationsvorrichtung (11) nach Anspruch 13.

## Claims

1. A method for operating a navigation device (11), wherein a user input, which contains a location indication (28), is received and navigation data (25) for a destination described by the location indication (28) are determined on the basis of the location indication (28) in a navigation database (24), wherein a real image (29) of the destination is requested from at least one device-external image source (17, 18) and is displayed on a display surface (14) when the real image (29) is received,
**characterized in that**
if it is signaled by the at least one image source (17, 18), that the real image (29) is lacking, a replacement real-time image is requested from a replacement webcam closest to the destination and a distance indication of the replacement webcam from the destination is determined and is displayed together with the replacement real-time image.

2. The method according to Claim 1, wherein at least one webcam is controlled as the image source (17) and a real-time image is requested as the real image (29).

3. The method according to any one of the preceding claims, wherein the location indication constitutes an address (30) of the destination and a photo service for building images is controlled as the image source (18) and a photograph of a building located at the address (30) is requested as the real image (29).

4. The method according to Claim 3, wherein first the photograph is requested and if it is lacking the real-time image is requested.

5. The method according to any one of the preceding claims, wherein the user input takes place in several stages and in a first stage a country indication (26) of a country, in which the destination is located, is received as the first part of the location indication (28) and when the country indication (26) is received a national symbol (27) of the country is determined and displayed.

6. The method according to any one of the preceding claims, wherein the real image (29) is displayed as a screen-filling background image during the display at least of one part of the location indication (28) and/or of the navigation data (25).

7. The method according to any one of the preceding claims, wherein upon detection of an actuation of the display surface (14) and/or of a full-image operating element (34) a full-image view (32) of the real image (29), which is free of the location indication (28) and/or the navigation data (25), is generated and displayed.

8. The method according to Claim 7, wherein the full-image view (32) is terminated after a predetermined display period and/or upon detection of an actuation of a return-operating element (33).

9. The method according to any one of the preceding claims, wherein on the basis of the navigation data (25) a navigation assistance is carried out and during the navigation assistance the real image (29) is updated, by requesting a current version of the real image (29) from the at least one image source (17, 18).

10. The method according to Claim 9, wherein the updating is carried out at predetermined points in time and/or upon detection of an actuation of an updating-operating element (35).

11. The method according to any one of Claims 9 or 10, wherein during the navigation assistance the current real image (29) is displayed together with navigation information.

12. The method according to any one of the preceding claims, wherein the real image (29) together with at least one part of the navigation data (25) is kept stored in a data memory for previous navigation destinations.

13. A navigation device (11) with a processor device, which is configured to carry out a method according to any one of the preceding claims.

14. A motor vehicle (10) with a display surface (14) and with a navigation device (11) according to Claim 13.

## Revendications

1. Procédé d'exploitation d'un dispositif de navigation (11), une entrée d'utilisateur, qui contient une indication de lieu (28), étant reçue et, sur la base de l'indication de lieu (28), dans une base de données de navigation (24), des données de navigation (25) concernant une destination décrite par l'indication de lieu (28) sont déterminées, moyennant quoi, à partir d'au moins une source d'image (17, 18) extérieure au dispositif, une image réelle (29) de la destination est demandée et, lors de la réception de l'image réelle (29), celle-ci est affichée sur une surface d'affichage (14),
**caractérisé en ce que**
s'il est signalé, par l'au moins une source d'image (17, 18), que l'image réelle (29) est manquante, une image en temps réel de remplacement est demandée par une webcam de remplacement la plus proche de la destination et une indication de distance entre la webcam de remplacement et la destination est déterminée et affichée en même temps que l'image en temps réel de remplacement.

2. Procédé selon la revendication 1, moyennant quoi, en tant que source d'image (17), au moins une webcam est contrôlée et en tant qu'image réelle (29), une image en temps réel est demandée.

3. Procédé selon l'une des revendications précédentes, l'indication de lieu représentant une adresse (30) de la destination et, en tant que source d'image (18), un service de photo pour des images de bâtiments est contrôlé et, en tant qu'image réelle (29), une photographie d'un bâtiment se trouvant à l'adresse (30) est demandée.

4. Procédé selon la revendication 3, la photographie étant d'abord demandée et, en cas d'absence, l'image en temps réel est ensuite demandée.

5. Procédé selon l'une des revendications précédentes, l'entrée de l'utilisateur ayant lieu en plusieurs étapes et, dans une première étape, une indication de pays (26) d'un pays dans lequel se trouve la destination, est reçue en tant que première partie de l'indication de lieu (28) et, lors de la réception de l'indication de pays (26), un symbole national (27) du pays est déterminé et affiché.

6. Procédé selon l'une des revendications précédentes, l'image réelle (29) étant affichée sous la forme d'une image d'arrière-plan remplissant l'écran pendant l'affichage d'au moins une partie de l'indication de lieu (28) et/ou des données de navigation (25).

7. Procédé selon l'une des revendications précédentes, moyennant quoi, lors de la détection d'un actionnement de la surface d'affichage (14) et/ou d'un élément de commande plein écran (34), une vue en plein écran (32) de l'image réelle (29), sans l'indication de lieu (28) et/ou les données de navigation (25), est générée et affichée.

8. Procédé selon la revendication 7, la vue en plein écran (32) est à nouveau terminée après une durée d'affichage prédéterminée et/ou lors de la détection de l'actionnement d'un élément de commande de retour (33).

9. Procédé selon l'une des revendications précédentes, moyennant quoi, sur la base des données de navigation (25), une assistance de navigation est effectuée et pendant l'assistance de navigation, l'image réelle (29) est actualisée grâce au fait qu'une version actuelle de l'image réelle (29) est demandée auprès de l'au moins une source d'images (17, 18).

10. Procédé selon la revendication 9, l'actualisation étant effectuée à des moments prédéterminés et/ou lors de la détection de l'actionnement d'un élément de commande d'actualisation (35).

11. Procédé selon l'une des revendications 9 ou 10, moyennant quoi, pendant l'assistance de navigation, l'image réelle (29) actuelle est affichée en même temps que les données de navigation.

12. Procédé selon l'une des revendications précédentes, l'image réelle (29) étant enregistrée, conjointement avec au moins une partie des données de navigation (25), dans une mémoire de données pour des destinations de navigation précédentes.

13. Dispositif de navigation (11) avec un dispositif à processeur, qui est conçu pour exécuter un procédé selon l'une des revendications précédentes.

14. Véhicule automobile (10) avec une surface d'affichage (14) et avec un dispositif de navigation (11) selon la revendication 13.
